# EUROPEAN PATENT SPECIFICATION

(11) **EP 1 319 876 B1**
(45) Date of publication and mention of the grant of the patent: **12.01.2005**
(21) Application number: 02080243.5
(22) Date of filing: 11.12.2002
(51) Int. Cl.: F16K 1/226

(54) **Duct interception device**
Schliessvorrichtung für eine Leitung
Dispositif d'interception pour conduits

(30) Priority: 13.12.2001 IT MI20012623
(43) Date of publication of application: 18.06.2003
(73) Proprietor: BRAVO S.p.A., I-36100 Vicenza (IT)
(72) Inventor: Bravo, Genesio, 36075 Montecchio Maggiore (Vicenza) (IT)
(74) Representative: Martegani, Franco

(56) References cited:
- DE-A- 19 652 169
- FR-A- 726 548
- FR-A- 2 341 083
- GB-A- 435 059
- US-A- 2 970 803
- US-A- 5 700 323

## Description

The present invention relates to a duct interception device of a machine suitable for the treatment of food mixtures, in particular a machine for the production of milk-based ice-cream.

Machines for the treatment of food mixtures, which can also consist, for example, of pasteurizers and homogenizers, can be equipped with a series of ducts and/or tanks, in which the different treatment phases are effected. The tanks communicate with each other by means of ducts equipped with interception devices, consisting, for example, of a butterfly valve, which regulates the intermittent flow of the food mixture. Documents FR 2 341 083, GB 435 059 and FR 726 548 for example disclose a duct interception device comprising a butterfly valve peripherally equipped with a removable inflatable tightening ring.

The known butterfly valves, however, can be subject to slight drawing as a result of wear over a period of time, or to processing tolerances.

In the particular case, to provide an illustrative but non-limiting example, of a machine for the production of home-made ice-cream, the food mixture treated is generally based on milk. Machines of the known type comprise the use of heated pasteurizers, optionally with aging tubs, and cooled thickeners equipped with mixers. The ice-cream (as an end-product) is then supplied through a mouth situated on the front part of the thickener.

The connection of an upper pasteurization tank of non-pasteurized milk, or food mixtures, possibly based on milk, with a lower thickening tank by means of a duct closed by a butterfly valve, is already known. At the end of the pasteurization phase of the food mixture, the operator manually activates the butterfly valve to discharge the pasteurized mixture from the upper tank to the lower tank.

The pasteurization treatment of a first food mixture can be effected contemporaneously with the thickening treatment of a previously pasteurized compound, thus allowing the continuous processing of the machine. Furthermore, as the times necessary for the pasteurization and thickening processes are practically identical, the contemporaneous functioning allows the optimization of the production.

Any possible drawing of the butterfly valve, even if minimum, cannot be tolerated when the product to be pasteurized is non-pasteurized milk, or a food mixture containing milk. In some European states there are, in fact, specific regulations concerning the treatment of milk and/or milk-based food mixtures. The mixing of non-pasteurized milk, in fact, with food mixtures which do not have to be subjected to subsequent pasteurization treatment, is absolutely prohibited.

For these machines there is therefore the problem of having an interception device of the product in the pasteurization phase, with a perfect seal, also over a period of time. The same problem, however, can also generally be found for machines suitable for the treatment of food mixtures. Furthermore, this device must be made of a material suitable for the use of food and appropriately shaped to facilitate cleaning operations.

A general objective of the present invention is to solve the above drawbacks of the known art in a simple, economic and particularly functional way.

In view of the above objective, according to the present invention, the idea has been conceived of producing a duct interception device of a machine suitable for the treatment of products and/or food mixtures, having the characteristics specified in the enclosed claims.

The structural and functional characteristics of the present invention, as also its advantages with respect to the known art, will become clearer and more evident from the following description, referring to the enclosed drawings, which illustrate an interception device produced according to the innovative principles of the invention itself. In the drawings:
- figures 1 and 2 show a raised lateral sectional view of a first embodiment of a duct interception device of a machine suitable for the treatment of food mixtures, object of the present invention, in an open position and interception position, respectively;
- figure 3 is an enlarged detail of figure 2, illustrating a first embodiment of a butterfly valve of the interception device, object of the present invention;
- figure 4 is a partially sectional exploded view of a detail of figure 1;
- figures 5 and 6 are partially sectional exploded views and respectively rotated by 90° of a second embodiment of a butterfly valve in two pieces;
- figures 7 and 8 show a raised lateral view of a detail of a further embodiment of an interception device, object of the present invention, sectioned in an open position and viewed in an interception position, respectively.

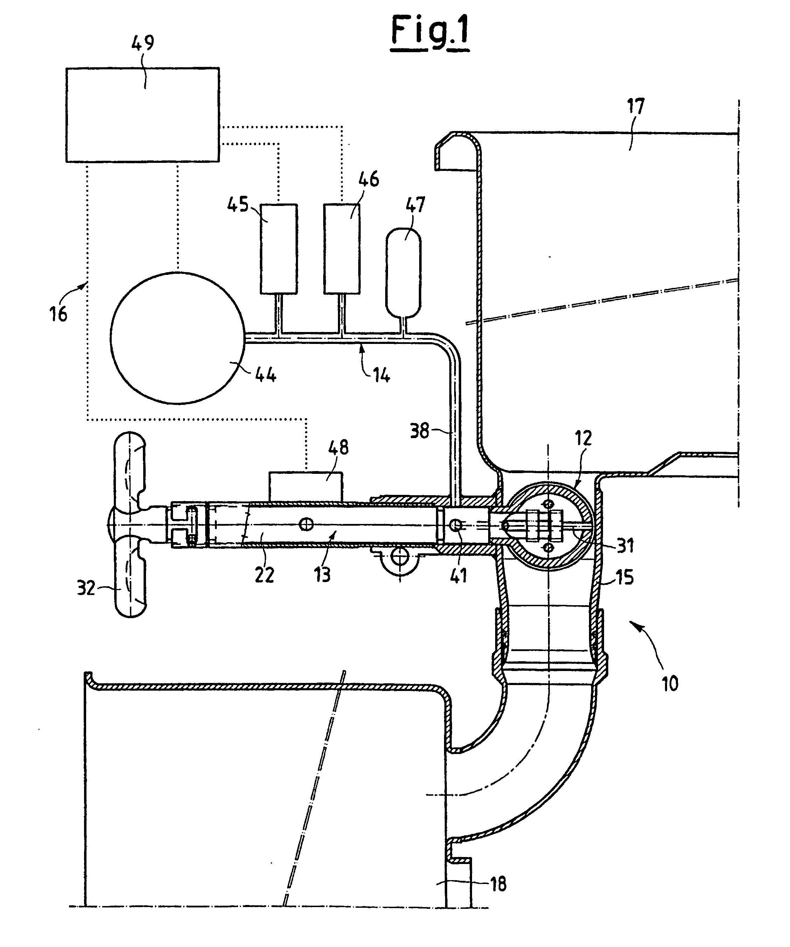

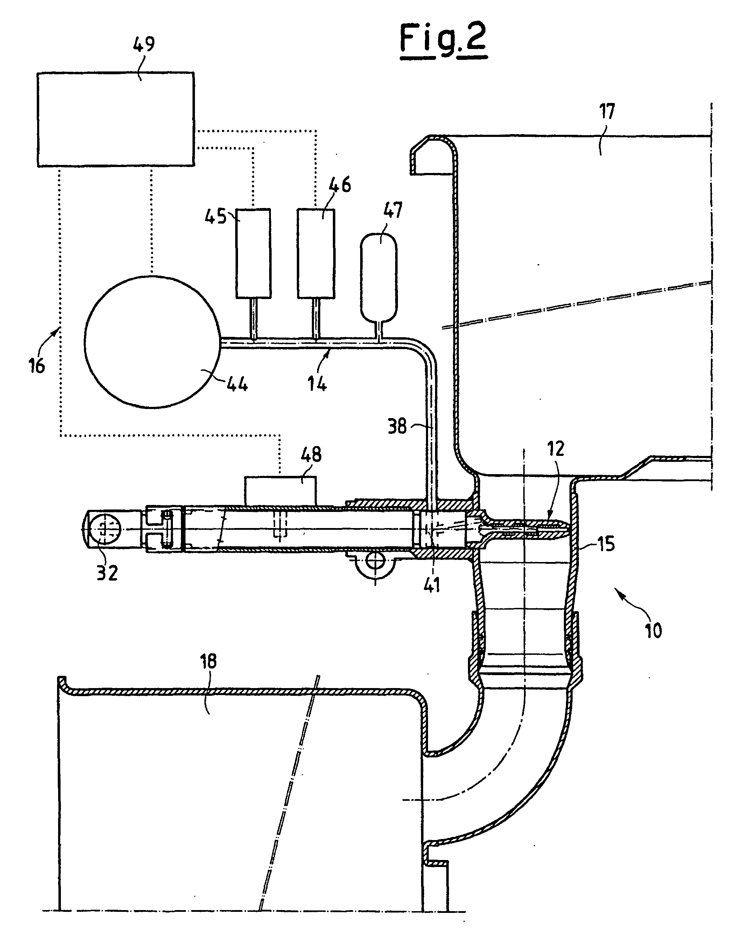

With reference to the drawings, a duct interception device of a machine suitable for the treatment of food mixtures in question is indicated as a whole with 10, and in the example illustrated in figures 1 and 2, according to a first embodiment, comprises a hollow butterfly valve 12, activation devices 13 of the valve 12, a pneumatic circuit 14 which pressurizes from the inside a circumferential sealing portion of the valve 12, creating a positive seal on the internal diameter of a duct 15 and an electronic control and drive circuit 16.

The duct 15 connects, for example, an upper tank 17 with a lower tank 18. In the particular case of a machine for the production of ice-cream, the pasteurization of the starting mixture based on milk is effected in the upper tank 17, whereas the thickening is carried out in the lower tank 18.

The butterfly valve 12 consists of a disk body 19 equipped with a sleeve 20 for connection with a maneuvering rod 22 which forms part of the activation devices 13.

The disk body 19 is externally equipped with a circumferential throat 23 which forms two sealing lips 24, whereby contact is established on the internal diameter of the duct 15, as shown in figures 1 and 2.

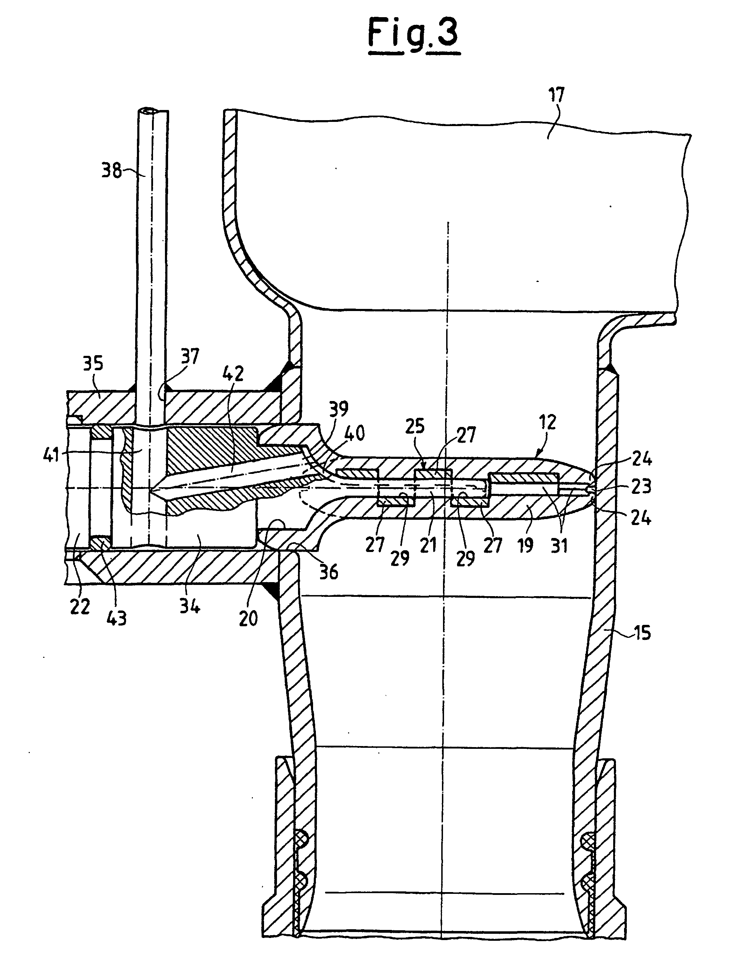

The disk body 19 of the butterfly valve 12 of the interception device 10, object of the present invention, is made, for example, of an elastically yielding thermoplastic material and, in a first embodiment, shown in figures 1 to 4, it is moulded in a single piece around a reinforcing core, consisting of a circular plate 25 having a smaller diameter with respect to the disk body 19. Close to the edge of the disk body 19, there is, therefore, an annular portion 26.

The plate 25 is equipped with transversal bridges 27 alternately situated on two different parallel planes symmetrical with respect to an intermediate plane of the valve 12.

The transversal bridges 27 form a cavity 29 inside the valve 12 for the insertion of a tapered point 21 of the maneuvering rod 22.

The plate 25, on which the mechanical stress transmitted by means of the maneuvering rod 22 is discharged, is made of a metallic material or, alternatively, of a rigid plastic material.

The plate 25 is also equipped with holes 30 which, thanks to the formation of bridges of material during the moulding, ensure a greater constraint with the disk body 19.

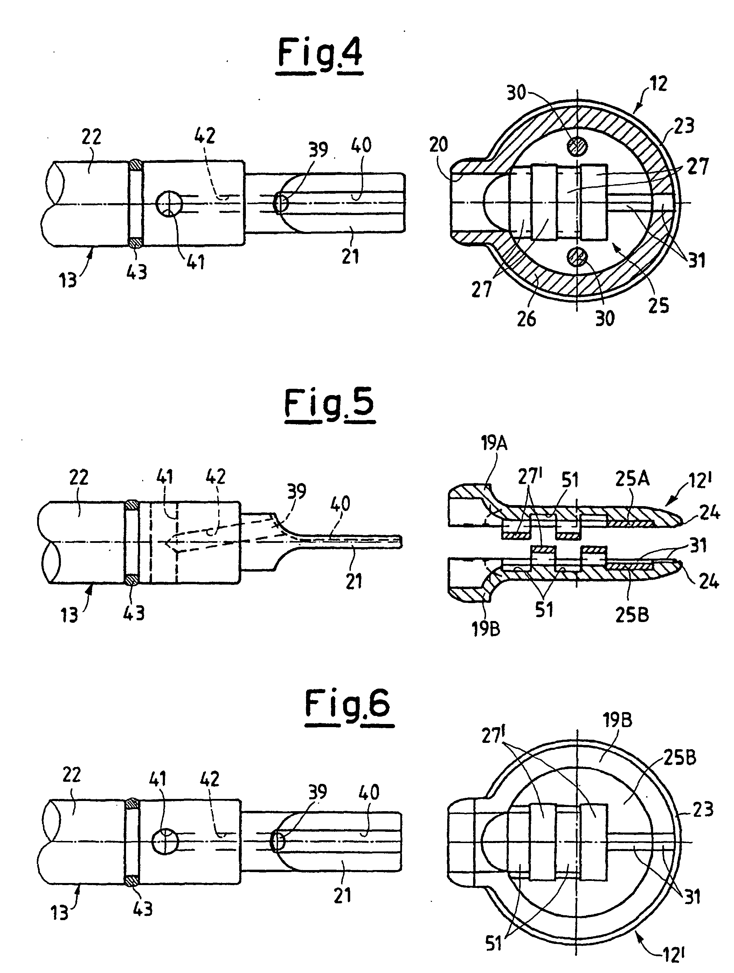

According to what is illustrated in figures 1 and 4 as an illustrative but non-limiting example, a groove 31 can be present in the valve 12. The groove 31, situated in the intermediate plane, extends outside the disk body 19 into the circumferential throat 23, between the two sealing lips 24. The groove 31 is present both in the plate 25 and in the annular portion 26 of the disk body 19 and connects the cavity 29 with the circumferential throat 23.

The presence of said groove 31 provides the interception device 10 with a greater seal, due to the improved distribution of the flow of pressurized air inside the valve 12 and, above all, between the two lips 24.

In the embodiment of the interception device, shown in the figures, as a non-limiting example only, the maneuvering rod 22 is made up of a knob 32, outside the machine, for the manual activation on the part of the operator and a terminal portion 34 from which the tapered point 21 extends.

The maneuvering rod 22 is housed in a sleeve 35, applied to the wall of the duct 15, for example by means of welding, in correspondence with an inlet 36 in which the coupling 20 of the butterfly valve 12 is inserted under pressure.

On the wall of the sleeve 35 there is a hole 37 for the passage of a compressed air feeding duct 38, which is inserted in correspondence with a system of channels situated in the terminal portion 34 of the maneuvering rod 22 and which connect the duct 38 with a hole 39 on the external concave surface of the tapered point 21.

The tapered point 21 has a throat 40 which extends axially starting from the hole 39 and sends the compressed air inside the butterfly valve 12 (figure 4).

A first through channel 41 is present in the terminal portion 34; a second channel 42 with a sloping axis connects the central part of the first channel 41 with the hole 39 on the tapered point 21.

The presence of a sealing element 43, such the O-ring illustrated, upstream of the terminal portion 34 of the rod 22, guarantees the seal of the pneumatic circuit 14.

The pneumatic circuit 14 is fed by a dry air compressor 44. Pressure measuring devices are applied in series to the feeding duct 38, to keep the regime pressure constant and to intervene in the case of pressure drops. A high pressure manostat 45 and a low pressure manostat 46 keep the pressure within a predefined range of values, for example between an overpressure of 0.1 bar and an overpressure of 0.05 bar. In a different embodiment, not shown, only one electronic manostat can be present, capable of detecting upward or downward pressure changes, maintaining, for example, a constant overpressure value of 0.02 bar.

An air reserve tank 47 is also inserted in series on the feeding duct, acting as a lung-chamber for modulating the pressure changes between the discharge and supply phases of the compressor 44.

A position sensor 48 for example magnetic, connected by means of the electronic circuit 16 to an electronic drive centre 49, is also applied to the rod 22. An acoustic signal, for example, can warn the operator that the valve 12 is in an open position, thus avoiding the accidental filling of the upper tank 17 when the duct 15 is not intercepted.

The electronic drive centre 49 processes the signals coming from the manostats 45 and 46, and from the position sensor 48, through the electronic circuit 16 it controls the functioning of the compressor 44 as well as other peripheric devices such as printers for registering the process, and also a buzzer and an alarm lamp.

A second embodiment of a butterfly valve 12' of the interception device 10, object of the present invention, shown in figures 5 and 6, comprises a disk body 19 consisting of two halves 19A and 19B, mechanically coupled, each having a plate 25A and 25B, complementary to each other. The plates 25A and 25B are distinguished by transversal bridges 27' arranged on a parallel plane, respectively above or below the intermediate plane of the valve and interspaced so as to penetrate each other when the plates 25A and 25B are superimposed.

The bridges 27' form a cavity 29 for the insertion of the tapered point 21, substantially analogously to what is described above.

Figure 5 illustrates two complementary plates 25A and 25B, in which the interspaced transversal bridges 27' and cavities 51 situated in the two halves 19A and 19B of the disk body, allowing the penetration of the facing elements, can be observed in succession.

The tapered stem 21 of the maneuvering rod 22, completely analogous to that described above, inserted in the cavity 29 formed by the transversal bridges 27' of the penetrating plates 25A and 25B, creates a mechanical seal between the two halves of the disk body 19A and 19B.

The formation of two halves which can be easily dismantled by extracting the point 21 allows a better cleaning of the single components.

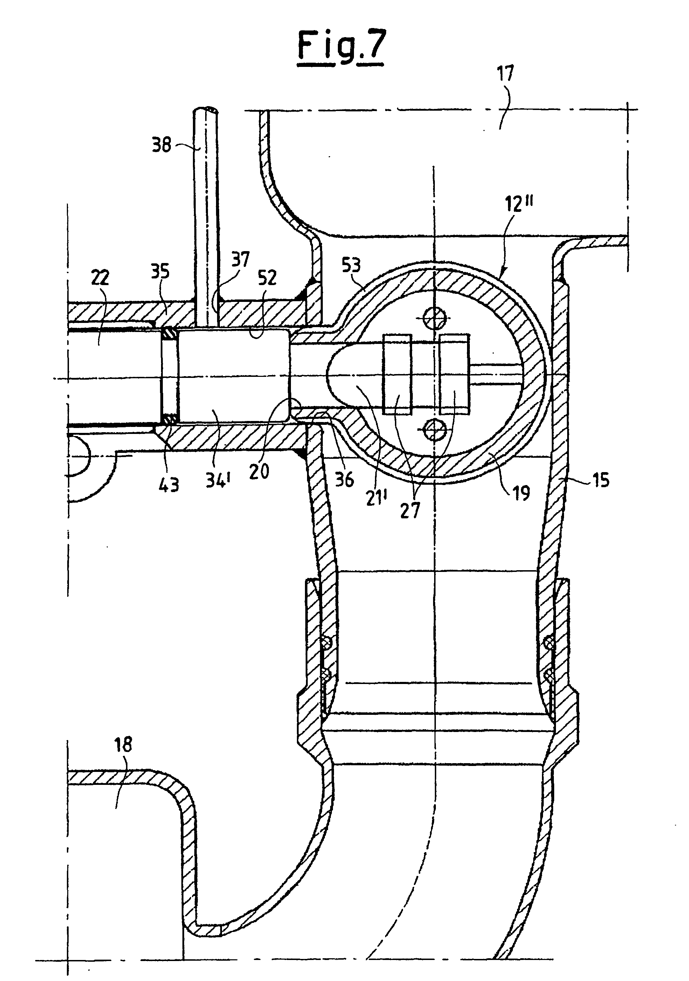

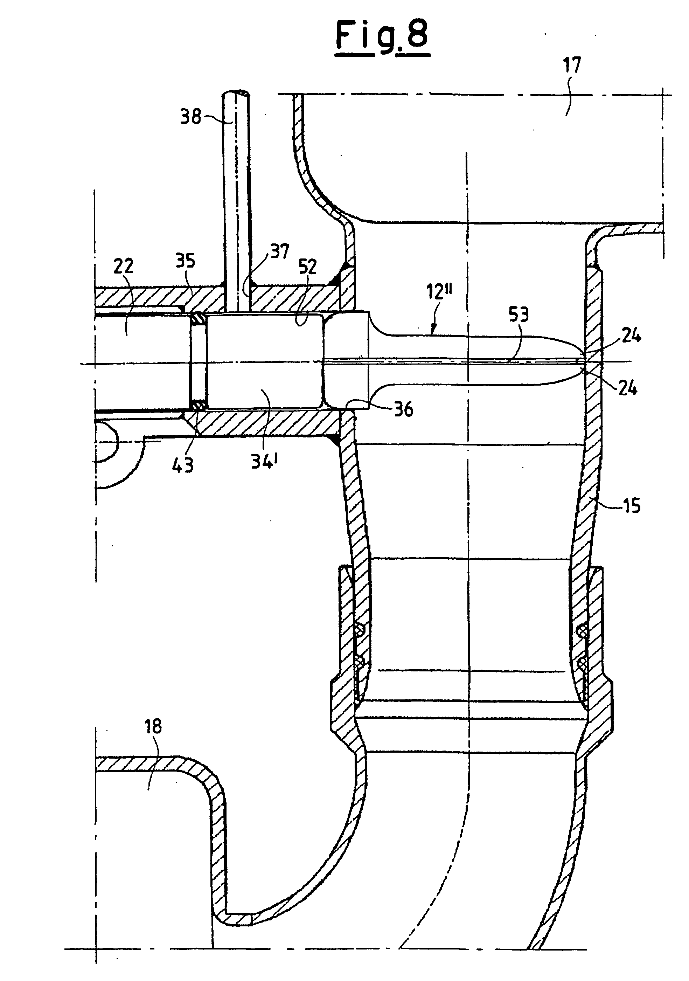

A further embodiment of the interception device, object of the present invention, shown in figures 7 and 8, comprises the use of a butterfly valve 12'' externally equipped with a perimetral throat 53, present on both the disk body 19 and along the sleeve 20 of the valve itself, forming two sealing lips 24.

The maneuvering rod 22 has a terminal portion 34', and also a tapered point 21' with full section without any channels or grooves.

The pressurized air coming from the feeding duct 38 enters between the sleeve 35 and the terminal portion 34' of the maneuvering rod 22 in a hollow space 52 connected with the perimetral throat 53.

As the contact surface, in fact, between the coupling 20 and the inlet 36 of the duct 15 is not continuous, the pressurized air can enter between the two lips 24.

The butterfly valve 12" can indifferently consist of a single piece or two parts, according to what is described above.

When the butterfly valve 12, 12' or 12" is in a horizontal interception position, the seal on the internal diameter of the duct 15 is guaranteed by the pressurization of the circumferential sealing portion of the disk body 19 made of an elastically yielding thermoplastic material, which forces the sealing lips 24 against the walls of the duct 15 itself.

Furthermore, the entry of pressurized air between the lips 24 creates an increased seal against the wall of the duct 15, as the lips 24 are deformed and forced. Moreover, as the pressure of the air in the groove 23 or 53 is greater than the pressure of the mixture, it acts as a sealing element (like a normal O-ring) opposing its drawing.

The functioning of the pneumatic circuit 14, described below, is entirely driven in an automated way by the electronic control centre 49 on the basis of the signals detected by the position sensors 48 and pressure sensors 45 and 46 or by the single electronic manostat.

When the magnetic sensor 48, in fact, detects that the butterfly valve 12, 12' or 12" is in an interception position, the compressor 44 pushes pressurized air through the feeding duct 38, pressurizing the valve as described

. When the maximum pre-established regime pressure is reached, for example equal to an overpressure of 0.1 bar, detected by the high pressure manostat 45, the compressor stops.

A constant maximum regime pressure must be ensured when the valve is in an interception position. If there is a loss in the pneumatic circuit 14, the pressure drop is revealed by the low pressure manostat 46 and the compressor 44 is therefore re-activated to reestablish the pressure values suitable for guaranteeing the seal of the butterfly valve.

At the end of the pasteurization operation of the food mixture in the upper tank 17, revealed, for example, by means of a temperature control device, the operator manually opens the butterfly valve 12, 12' or 12'' by acting on a knob 32 and causing the venting of the pressurized circuit 14.

Alternatively, the control centre 49 itself can drive, by means of an electric motor, not shown, the automatic opening and closing of the butterfly valve.

The compressor 44 will only pressurize the pneumatic circuit 14, when the position sensor 48 indicates that the butterfly valve 12, 12' or 12" has been brought back into interception position.

In the interception device 10, shown in figures 1 to 6, as the first channel 41 passes through the terminal portion 34 of the maneuvering rod 22, the functioning of the pneumatic circuit 14 is ensured when the butterfly valve 12 or 12' is in any of the two interception positions, i.e. when the intermediate plane is horizontal.

From what is described above, with reference to the figures it is evident that a duct interception device of a machine suitable for treating food mixtures according to the invention is particularly useful and advantageous, thus achieving the objective specified in the introduction of the description.

The forms of the duct interception device of a machine suitable for the treatment of food mixtures, object of the present invention, as also the materials, can naturally be different from that shown as a purely illustrative but non-limiting example in the drawings.

The protective scope of the invention is therefore delimited by the enclosed claims.

## Claims

1. A duct interception device of a machine suitable for the treatment of food mixtures comprising a butterfly valve (12, 12', 12''), equipped with a circumferential sealing portion on a duct (15), and activation devices (13) of said valve (12, 12', 12" ), wherein said circumferential sealing portion is pressurized with a pneumatic circuit (14) for the inlet of compressed air, and wherein said valve (12, 12') is externally equipped with a circumferential throat (23) between two sealing lips (24), **characterized in that** said valve (12, 12', 12") is made up of a disk body (19) made of an elastically yielding thermoplastic material and at least one reinforcing core with a plate (25, 25A, 25B).

2. The device according to claim 1, **characterized in that** a groove (31), situated in an intermediate plane of said valve (12, 12') for the distribution of pressurized air, is inserted between said sealing lips (24).

3. The device according to claim 1, **characterized in that** said valve (12'') is externally equipped with a perimetral throat (53) lying between two sealing lips (24), said perimetral throat (53) being situated on a disk body (19) and on a sleeve (20) suitable for the connection of said butterfly valve (12") to said activation devices (13).

4. The device according to claim 1, **characterized in that** said disk body (19) is moulded in a single piece around a plate (25).

5. The device according to claim 1, **characterized in that** said disk body (19) consists of two halves (19A and 19B) which can be mechanically coupled, and in which each of said halves (19A and 19B) is moulded on a complementary plate (25A or 25B).

6. The device according to claims 4 or 5, **characterized in that** said plates (25, 25A, 25B) are equipped with transversal bridges (27, 27') belonging to different parallel planes, in which said bridges (27) of said plate (25) or said bridges (27') of said complementary plates (25A and 25B) coupled with each other, form a cavity (29) for the insertion of said activation devices (13).

7. The device according to claim 1, **characterized in that** said at least one plate (25, 25A, 25B) is made of metal.

8. The device according to claim 1, **characterized in that** said at least one plate (25, 25A, 25B) is made of a plastic material.

9. The device according to claim 1, **characterized in that** said activation devices (13) consist of a 5 maneuvering rod (22) which comprises a knob (32) and a terminal portion (34, 34') connected to said pneumatic circuit (14).

10. The device according to claim 9, **characterized in that** in said terminal portion (34) of said maneuvering rod (22) there is a system of channels (41, 42) connected to said pneumatic circuit (14).

11. The device according to claim 9, **characterized in that** a hollow space (52) is connected to said pneumatic circuit (14) between said terminal portion (34') and a housing sleeve (35) of said maneuvering rod (22), said sleeve (35) being applied to said duct (15) in correspondence with an inlet (36) for the insertion of said butterfly valve (22").

12. The device according to claim 9, **characterized in that** said maneuvering rod (22) is equipped with a tapered point (21, 21').

13. The device according to claim 12, **characterized in that** said tapered point (21) is equipped with an outlet hole (39) of said system of channels (41, 42) and an axial throat (40) for sending pressurized air inside said butterfly valve (12, 12').

14. The device according to claim 9, **characterized in that** said maneuvering rod (22) has a position sensor (48).

15. The device according to claim 1, **characterized in that** said pneumatic circuit (14) consists of a feeding duct (38) to which pressure measuring devices (45, 46) are applied.

16. The device according to claim 15, **characterized in that** said pressure measuring devices consist of a high pressure manostat (45).

17. The device according to claim 15, **characterized in that** said pressure measuring devices consist of a low pressure manostat (46).

18. The device according to claim 15, **characterized in that** said pressure measuring devices consist of an electronic manostat, suitable for measuring the maximum and minimum pressure.

19. The device according to claim 15, **characterized in that** said an air reserve tank (47) is applied to said feeding duct (38).

20. The device according to claim 1, **characterized in that** said pneumatic circuit (14) is controlled by an electronic control centre (49) through an electronic circuit (16).

## Patentansprüche

1. Rohrschließvorrichtung einer Maschine, welche zur Bearbeitung von Nahrungsmittelmischungen geeignet ist, umfassend ein Drosselventil (12, 12', 12"), welches mit einem Umfangsdichtabschnitt auf einem Rohr (15) ausgestaltet ist, und Aktivierungsvorrichtungen (13) des Ventils (12, 12', 12"), wobei der Umfangsdichtabschnitt durch eine pneumatische Schaltung (14) für den Einlass von komprimierter Luft unter Druck gesetzt ist, und wobei das Ventil (12, 12') außen mit einer Umfangshohlkehle (23) zwischen zwei Dichtungslippen (24) ausgestaltet ist, **dadurch gekennzeichnet, dass** das Ventil (12, 12', 12") aus einem aus einem elastischen nachgiebigen thermoplastischen Material hergestellten Scheibenkörper (19) und mindestens einem Verstärkungskern mit einer Platte (25, 25A, 25B) aufgebaut ist.

2. Vorrichtung nach Anspruch 1, **dadurch gekennzeichnet, dass** eine Vertiefung (31), welche in einer Zwischenebene des Ventils (12, 12') für die Verteilung der unter Druck gesetzten Luft angeordnet ist, zwischen den Dichtungslippen (24) eingefügt ist.

3. Vorrichtung nach Anspruch 1, **dadurch gekennzeichnet, dass** das Ventil (12") außen mit einer Außenumfangshohlkehle (53), welche zwischen den zwei Dichtungslippen (24) liegt, ausgestaltet ist, wobei die Außenumfangshohlkehle (53) auf einem Scheibenkörper (19) und einer Hülse (20), welche für die Verbindung des Drosselventils (12'') zu den Aktivierungsvorrichtungen (13) geeignet ist, angeordnet ist.

4. Vorrichtung nach Anspruch 1, **dadurch gekennzeichnet, dass** der Scheibenkörper (19) in einem einzigen Stück um eine Platte (25) herum ausgeformt ist.

5. Vorrichtung nach Anspruch 1, **dadurch gekennzeichnet, dass** der Scheibenkörper (19) aus zwei Hälften (19A und 19B) besteht, welche mechanisch gekoppelt werden können, und wobei jede dieser Hälften (19A und 19B) auf einer komplementären Platte (25A oder 25B) ausgeformt ist.

6. Vorrichtung nach Anspruch 4 oder 5, **dadurch gekennzeichnet, dass** die Platten (25, 25A, 25B) mit Querbrücken (27, 27'), welche zu verschiedenen parallelen Ebenen gehören, ausgestaltet sind, wobei die Brücken (27) der Platte (25) oder die Brücken (27') der komplementären Platten (25A und 25B), welche miteinander gekoppelt sind, eine Aushöhlung (29) für die Einführung der Aktivierungsvorrichtungen (13) ausbilden.

7. Vorrichtung nach Anspruch 1, **dadurch gekennzeichnet, dass** mindestens eine Platte (25, 25A, 25B) aus Metall hergestellt ist.

8. Vorrichtung nach Anspruch 1, **dadurch gekennzeichnet, dass** mindestens eine Platte (25, 25A, 25B) aus einem Kunststoffmaterial hergestellt ist.

9. Vorrichtung nach Anspruch 1, **dadurch gekennzeichnet, dass** die Aktivierungsvorrichtungen (13) aus einem Manövrierstab (22) besteht, welcher einen Knopf (32) und einen Anschlussabschnitt (34, 34'), welcher mit der pneumatischen Schaltung (14) verbunden ist, umfasst.

10. Vorrichtung nach Anspruch 9, **dadurch gekennzeichnet, dass** sich in dem Anschlussabschnitt (34) des Manövrierstabes (22) ein Kanalsystem (41, 42), welches mit der pneumatischen Schaltung (14) verbunden ist, befindet.

11. Vorrichtung nach Anspruch 9, **dadurch gekennzeichnet, dass** ein Hohlraum (52) zwischen dem Anschlussabschnitt (34') und einer aufnehmenden Hülse (35) des Manövrierstabes (22) mit der pneumatischen Schaltung (14) verbunden ist, wobei die Hülse (35) in Übereinstimmung mit einem Einlass (36) für die Einführung des Drosselventils (12") an das Rohr (15) angeschlossen ist.

12. Vorrichtung nach Anspruch 9, **dadurch gekennzeichnet, dass** der Manövrierstab (22) mit einem sich verjüngenden Bereich (21, 21') ausgestaltet ist.

13. Vorrichtung nach Anspruch 12, **dadurch gekennzeichnet, dass** der sich verjüngende Bereich (21) mit einem Auslassloch (39) des Kanalsystems (41, 42) und einer axialen Hohlkehle (40), um die unter Druck stehende Luft in das Drosselventil (12, 12') zu befördern, ausgestaltet ist.

14. Vorrichtung nach Anspruch 9, **dadurch gekennzeichnet, dass** der Manövrierstab (22) einen Positionssensor (48) aufweist.

15. Vorrichtung nach Anspruch 1, **dadurch gekennzeichnet, dass** die pneumatische Schaltung (14) aus einem Versorgungsrohr (38), auf welches sich Druckmessvorrichtungen (45, 46) beziehen, besteht.

16. Vorrichtung nach Anspruch 15, **dadurch gekennzeichnet, dass** die Druckmessvorrichtungen aus einem Hochdruckwächter (45) bestehen.

17. Vorrichtung nach Anspruch 15, **dadurch gekennzeichnet, dass** die Druckmessvorrichtungen aus einem Niederdruckwächter (46) bestehen.

18. Vorrichtung nach Anspruch 15, **dadurch gekennzeichnet, dass** die Druckmessvorrichtungen aus einem elektronischen Druckwächter bestehen, welcher geeignet ist, den maximalen und den minimalen Druck zu messen.

19. Vorrichtung nach Anspruch 15, **dadurch gekennzeichnet, dass** ein Luftreservetank (47) an das Versorgungsrohr (38) angeschlossen ist.

20. Vorrichtung nach Anspruch 1, **dadurch gekennzeichnet, dass** die pneumatische Schaltung (14) durch ein elektronisches Steuerzentrum (49) über eine elektronische Schaltung (16) gesteuert ist.

## Revendications

1. Dispositif d'interception pour une conduite d'une machine qui convient pour le traitement des mélanges alimentaires comprenant une vanne papillon (12, 12', 12"), munie d'une partie de joint circonférentielle, sur une conduite (15), et des dispositifs d'actionnement (13) de ladite vanne papillon (12, 12', 12"), dans lequel ladite partie de joint circonférentielle est mise sous pression grâce à un circuit pneumatique (14) pour l'entrée de l'air comprimé et dans lequel ladite vanne (12, 12') est munie, extérieurement, d'un étranglement circonférentiel (23) situé entre deux lèvres d'étanchéité (24), **caractérisé en ce que** ladite vanne (12, 12', 12") est composée d'un corps de disque (19) constitué d'un matériau thermoplastique élastiquement mou, et d'au moins un noyau de renforcement muni d'une plaque (25, 25A, 25B).

2. Dispositif selon la revendication 1, **caractérisé en ce qu'**une rainure (31), située dans un plan intermédiaire de ladite vanne (12, 12'), pour la distribution d'air sous pression, est insérée entre lesdites lèvres d'étanchéité (24).

3. Dispositif selon la revendication 1, **caractérisé en ce que** ladite vanne (12") est munie, extérieurement, d'un étranglement périmétrique (53) qui se trouve entre deux lèvres d'étanchéité (24), ledit étranglement périmétrique (53) étant situé sur un corps de disque (19) et sur un manchon (20) qui convient pour le raccordement de ladite vanne papillon (12") auxdits dispositifs d'actionnement (13).

4. Dispositif selon la revendication 1, **caractérisé en ce que** ledit corps de disque (19) est moulé en une seule pièce autour d'une plaque (25).

5. Dispositif selon la revendication 1, **caractérisé en ce que** ledit corps de disque (19) consiste en deux moitiés (19A et 19B) qui peuvent être couplées mécaniquement, et dans lequel chacune desdites moitiés (19A et 19B) est moulée sur une plaque complémentaire (25A ou 25B).

6. Dispositif selon la revendication 4 ou 5, **caractérisé en ce que** lesdites plaques (25, 25A, 25B) sont munies de ponts transversaux (27, 27') appartenant à différents plans parallèles, dans lequel lesdits ponts (27) de ladite plaque (25) ou lesdits ponts (27') desdites plaques complémentaires (25A ou 25B) couplées les uns avec les autres, forment une cavité (29) permettant l'insertion desdits dispositifs d'actionnement (13).

7. Dispositif selon la revendication 1, **caractérisé en ce que** ladite au moins une plaque (25, 25A, 25B) est constituée de métal.

8. Dispositif selon la revendication 1, **caractérisé en ce que** ladite au moins une plaque (25, 25A, 25B) est constituée de matière plastique.

9. Dispositif selon la revendication 1, **caractérisé en ce que** lesdits dispositifs d'actionnement (13) consistent en une tige de manoeuvre (22) qui comprend un bouton (32) et une partie terminale (34, 34') raccordée audit circuit pneumatique (14).

10. Dispositif selon la revendication 9, **caractérisé en ce que**, dans ladite partie terminale (34) de ladite tige de manoeuvre (22), se trouve un système de canaux (41, 42) raccordés audit circuit pneumatique (14).

11. Dispositif selon la revendication 9, **caractérisé en ce qu'**un espace creux (52) est raccordé audit circuit pneumatique (14) entre ladite partie terminale (34') et un manchon de logement (35) de ladite tige de manoeuvre (22), ledit manchon (35) étant appliqué sur ladite conduite (15) en correspondance avec un orifice d'admission (36) permettant l'insertion de ladite vanne papillon (12").

12. Dispositif selon la revendication 9, **caractérisé en ce que** ladite tige de manoeuvre (22) est munie d'une pointe effilée (21, 21').

13. Dispositif selon la revendication 12, **caractérisé en ce que** ladite pointe effilée (21) est munie d'un trou de sortie (39) dudit système de canaux (41, 42), et d'un étranglement axial (40) permettant d'envoyer de l'air sous pression à l'intérieur de ladite vanne papillon (12, 12').

14. Dispositif selon la revendication 9, **caractérisé en ce que** ladite tige de manoeuvre (22) possède un capteur de position (48).

15. Dispositif selon la revendication 1, **caractérisé en ce que** ledit circuit pneumatique (14) consiste en une conduite d'alimentation (38) sur laquelle les dispositifs de mesure de la pression (45, 46) sont connectés.

16. Dispositif selon la revendication 15, **caractérisé en ce que** lesdits dispositifs de mesure de pression consistent en un manostat à haute pression (45).

17. Dispositif selon la revendication 15, **caractérisé en ce que** lesdits dispositifs de mesure de pression consistent en un manostat à basse pression (46).

18. Dispositif selon la revendication 15, **caractérisé en ce que** lesdits dispositifs de mesure de pression consistent en un manostat électronique, qui convient pour mesurer les pressions maximale et minimale.

19. Dispositif selon la revendication 15, **caractérisé en ce que** ledit réservoir d'air (47) est connecté à ladite conduite d'alimentation (38).

20. Dispositif selon la revendication 1, **caractérisé en ce que** ledit circuit pneumatique (14) est commandé par un centre de commande électronique (49) par l'intermédiaire d'un circuit électronique (16).
